# EUROPÄISCHE PATENTSCHRIFT

(11) **EP 3 184 434 B1**
(45) Veröffentlichungstag und Bekanntmachung des Hinweises auf die Patenterteilung: **06.11.2019**
(21) Anmeldenummer: 16205410.0
(22) Anmeldetag: 20.12.2016
(51) Int. Cl.: B64D 29/06, B64D 29/08, F16B 5/02

(54) **TRIEBWERKSVERKLEIDUNG**
ENGINE COWL
CAPOT MOTEUR

(30) Priorität: 22.12.2015 DE 102015226546
(43) Veröffentlichungstag der Anmeldung: 28.06.2017
(73) Patentinhaber: Rolls-Royce Deutschland Ltd & Co KG, 15827 Blankenfelde-Mahlow (DE)
(72) Erfinder: CIPRIAN, Ispir I., 15827 Blankenfelde-Mahlow (DE)
(74) Vertreter: Hoefer & Partner Patentanwälte mbB

(56) Entgegenhaltungen:
- WO-A1-93/02920
- WO-A1-2010/006363
- WO-A1-2012/047103
- DE-U1- 29 710 853
- US-A- 2 685 469
- US-A- 3 019 472
- US-A- 4 878 255
- US-A1- 2004 227 033
- US-A1- 2007 169 311
- US-A1- 2008 099 601
- US-A1- 2009 173 823

## Beschreibung

Die vorliegende Erfindung betrifft eine Triebwerksverkleidung mit einstellbaren Türelementen, um ein exaktes Schließen der Türelemente an der Triebwerksverkleidung zu ermöglichen.

Triebwerksverkleidungen, insbesondere Flugtriebwerksverkleidungen, weisen üblicherweise große Türelemente auf, welche über Scharniere mit einem Gehäuseteil der Triebwerksverkleidung verbunden sind. Üblicherweise sind hierbei zwei Türelemente vorgesehen, welche sich in entgegengesetzte Richtungen aufklappen lassen, um bei Wartungsarbeiten einen möglichst guten Zugang zum Triebwerk zu ermöglichen. Hierbei kann sich das Problem ergeben, dass sich die Türelemente nicht mehr exakt schließen lassen bzw. ein großer Spalt zwischen den geschlossenen Türelementen oder dem Türelement und dem Gehäuseteil der Triebwerksverkleidung vorhanden ist. In derartigen Fällen besteht die Gefahr, dass ein Mechaniker das Türelement und/oder das Gehäuseteil bei einem Versuch, diese zu verriegeln, beschädigt. Ferner zeigt die WO 93/02920 A1 eine Triebwerksverkleidung gemäß dem Oberbegriff des Anspruchs 1. Aus der US 2008/0099601 A1 ist ferner ein Scharnier für eine Triebwerksverkleidung bekannt, bei der eine Position des gesamten Scharniers veränderbar ist.

Es ist daher Aufgabe der vorliegenden Erfindung, eine Triebwerksverkleidung bereitzustellen, welche bei einfachem Aufbau und einfacher, kostengünstiger Herstellbarkeit eine Verstellmöglichkeit einer Relativposition zwischen einem Gehäuseteil und einem Türelement der Triebwerksverkleidung im geöffneten und/oder geschlossenen Zustand ermöglicht.

Diese Aufgabe wird durch eine Triebwerksverkleidung mit den Merkmalen des Anspruchs 1 gelöst, die Unteransprüche zeigen bevorzugte Weiterbildungen der Erfindung.

Die erfindungsgemäße Triebwerksverkleidung mit den Merkmalen des Anspruchs 1 weist den Vorteil auf, dass eine Relativverstellung und somit eine Einstellung einer Position eines Türelements relativ zu einem Gehäuseteil einer Triebwerksverkleidung im geöffneten und/oder geschlossenen Zustand des Türelements möglich ist. Dadurch können herstellungsbedingte Spalte oder Überlappungen durch die einstellbare Position des Türelements ausgeglichen werden. Auch können geometrische Veränderungen des Türelements und/oder des Gehäuseteils, welche z.B. aufgrund der Temperaturen im Betrieb an der Triebwerksverkleidung auftreten können, ausgeglichen werden. Dies wird erfindungsgemäß dadurch erreicht, dass die Triebwerksverkleidung wenigstens ein Scharnier aufweist, welches das Türelement am Gehäuseteil öffenbar und verschließbar fixiert. Das Scharnier umfasst ein erstes und ein zweites Scharnierelement sowie einen Bolzen. Das Scharnier umfasst ferner eine Verstelleinrichtung, welche derart einstellbar ist, dass eine Relativposition des Türelements zum Gehäuseteil veränderbar ist. Somit kann durch die Erfindung ein Spalt oder eine Überlappung zwischen Türelement und Gehäuseteil durch das einstellbare Scharnier ausgeglichen werden. Da üblicherweise das Türelement aufgrund seiner Größe mit mehreren Scharnieren am Gehäuseteil fixiert ist, sind bevorzugt alle Scharniere einstellbar ausgebildet.

Ferner ist die Verstelleinrichtung eingerichtet, eine Position des Bolzens relativ zum ersten oder zweiten Scharnierelement zu verstellen. Der Bolzen wird dabei bevorzugt ausschließlich in einer Richtung senkrecht zu einer Bolzenachse verstellt.

Weiterhin umfasst das erste Scharnierelement eine erste Durchgangsöffnung zur Aufnahme des Bolzens, wobei der Bolzen spielfrei in der ersten Durchgangsöffnung angeordnet ist. Ferner umfasst das zweite Scharnierelement eine zweite Durchgangsöffnung, welche den Bolzen mit Spiel aufnimmt. Das Spiel ist dabei derart vorgesehen, dass der Bolzen senkrecht zur Bolzenachse verstellbar ist.

Gemäß der Erfindung umfasst die Verstelleinrichtung ferner wenigstens eine erste Rippenstruktur mit einer Vielzahl von ersten Rippen und einer Vielzahl von zweiten Rippen. Hierbei greifen die ersten und zweiten Rippen ineinander. Eine Verstellung kann dabei derart erfolgen, dass die Eingriffsposition zwischen den beiden Rippenanordnungen verändert wird, indem die ersten Rippen relativ zu den zweiten Rippen versetzt werden. Durch Auslegung von einer Breite der Rippe kann dabei eine Genauigkeit der Verstelleinrichtung eingestellt werden.

Besonders bevorzugt sind die ersten Rippen und die zweiten Rippen der ersten Rippenstruktur jeweils zueinander parallel. Dadurch kann eine einfache und schnelle Verstellung ermöglicht werden.

Gemäß einer weiteren bevorzugten Ausgestaltung der Erfindung umfasst die Verstelleinrichtung ferner eine zweite Rippenstruktur mit einer Vielzahl von dritten Rippen und einer Vielzahl von vierten Rippen. Die dritten und vierten Rippen greifen dabei ineinander. Die ersten und zweiten Rippenstrukturen ermöglichen dabei eine Verstellung des Türelements relativ zum Gehäuseteil in einer Ebene, d.h., in einer ersten Richtung mittels der ersten Rippenstruktur und in einer zweiten Richtung mittels der zweiten Rippenstruktur. Die beiden Richtungen spannen dabei die Verstellebene auf. Die Verstellebene ist dabei besonders bevorzugt senkrecht zu einer Bolzenachse.

Besonders bevorzugt sind die erste Rippenstruktur und die zweite Rippenstruktur senkrecht zueinander angeordnet. Dadurch kann eine einfache und leicht erkennbare Verstellung der Relativposition zwischen Türelement und dem Gehäuseteil erreicht werden.

Für eine einfache Verstellbarkeit sind vorzugsweise die Abstände zwischen den ersten und zweiten Rippen sowie den dritten und vierten Rippen jeweils gleich.

Vorzugsweise sind die erste Rippenstruktur und/oder die zweite Rippenstruktur zweifach vorgesehen. Hierdurch wird eine Redundanz der Rippenstrukturen erhalten, und ferner eine sichere Fixierung einer eingestellten Position zwischen den Rippen aufgrund der vergrößerten Anzahl der Rippen im Vergleich mit nur einer einfachen Anordnung erhalten. Die doppelte Anordnung der ersten und zweiten Rippenstrukturen ist bevorzugt an einer Öffnung um 180° versetzt vorgesehen.

Für einen besonders kompakten Aufbau sind vorzugsweise die ersten Rippen direkt am Scharnierelement angeordnet. Die zweiten Rippen sind dabei an einem mit dem Bolzen verbundenen Bauteil angeordnet. Somit kann eine Teileanzahl des erfindungsgemäßen Scharniers gering gehalten werden und damit insbesondere Herstellkosten und Montagekosten gering gehalten werden.

Alternativ sind die ersten Rippen an einem mit dem ersten Scharnierelement verbundenen ersten Zwischenbauteil angeordnet. Die Verwendung des Zwischenbauteils ermöglicht dabei eine individuelle Anpassung der Verstelleinrichtung für unterschiedliche Einsatzzwecke, insbesondere unterschiedliche Kunden von Triebwerken oder unterschiedlichen Größen von Triebwerken.

Weiter bevorzugt sind die erste und zweite Rippenstruktur in einer Ebene angeordnet, welche senkrecht zu einer Bolzenachse ist. Dadurch kann eine sichere und einfache Verstellbarkeit der Verstelleinrichtung sichergestellt werden.

Die Rippen weisen vorzugsweise einen sich verjüngenden Querschnitt auf. Insbesondere weisen die Rippen einen im Wesentlichen dreieckförmigen Querschnitt auf. Der dreieckförmige Querschnitt ist dabei bevorzugt ein gleichseitiger Querschnitt oder ein gleichschenkliger Querschnitt.

Weiter bevorzugt weist die Triebwerksverkleidung genau ein erstes und ein zweites Türelement auf, welche mittels einer Vielzahl von einstellbaren Scharnieren am Gehäuseteil angeordnet sind. Das erste und zweite Türelement sind vorzugsweise gegenläufig öffenbar und schließbar, so dass ein großer Teilbereich des Triebwerks durch Öffnen der beiden Türelemente freigelegt werden kann. Dadurch können Wartungsarbeiten signifikant vereinfacht werden. Die Türelemente sind vorzugsweise über die gesamte axiale Länge des Triebwerks vorgesehen.

Weiter bevorzugt umfasst das Scharnier wenigstens eine Unterlegscheibe, um auch eine Einstellung des Scharniers in Richtung der Bolzenachse zu ermöglichen. Die Bolzenachse ist bevorzugt parallel zur Axialrichtung der Triebwerksverkleidung.

Die erfindungsgemäße Triebwerksverkleidung ist vorzugsweise eine Flugtriebwerksverkleidung.

Nachfolgend werden unter Bezugnahme auf die begleitende Zeichnung bevorzugte Ausführungsbeispiele der Erfindung im Detail beschrieben. In der Zeichnung sind gleiche bzw. funktional gleiche Teile mit den gleichen Bezugszeichen bezeichnet. In der Zeichnung ist:
- Fig. 1: eine schematische, perspektivische Ansicht einer Triebwerksverkleidung gemäß einem ersten Ausführungsbeispiel der Erfindung,
- Fig. 2: eine schematische, perspektivische Ansicht eines Scharniers von Fig. 1,
- Fig. 3: eine schematische, perspektivische Ansicht eines ersten Scharnierelements des Scharniers von Fig. 2,
- Fig. 4: eine schematische, perspektivische Ansicht eines zweiten Scharnierelements des Scharniers von Fig. 2,
- Fig. 5: eine schematische Explosionsdarstellung des Scharniers von Fig. 2,
- Fig. 6: eine Draufsicht des Scharniers von Fig. 2,
- Fig. 7: eine perspektivische Ansicht eines Zwischenbauteils des Scharniers von Fig. 2 mit einem ersten Teil einer Verstelleinrichtung,
- Fig. 8: eine perspektivische Ansicht einer Scheibe des Scharniers von Fig. 2 mit einem zweiten Teil der Verstelleinrichtung,
- Fig. 9 und 10: perspektivische Ansichten der Verstelleinrichtung der Fig. 7 und 8 von unterschiedlichen Seiten,
- Fig. 11: eine schematische, perspektivische Ansicht eines Scharniers gemäß einem zweiten Ausführungsbeispiel der Erfindung,
- Fig. 12a und 12b: schematische, perspektivische Ansichten eines zweiten Scharnierelements bzw. eines Scharniers gemäß einem dritten Ausführungsbeispiel der Erfindung, und
- Fig. 13a, 13b sowie 14a, 14b: schematische Ansichten von unterschiedlichen Ausbildungen von Rippenstrukturen, welche bei allen beschriebenen Ausführungsbeispielen verwendet werden können.

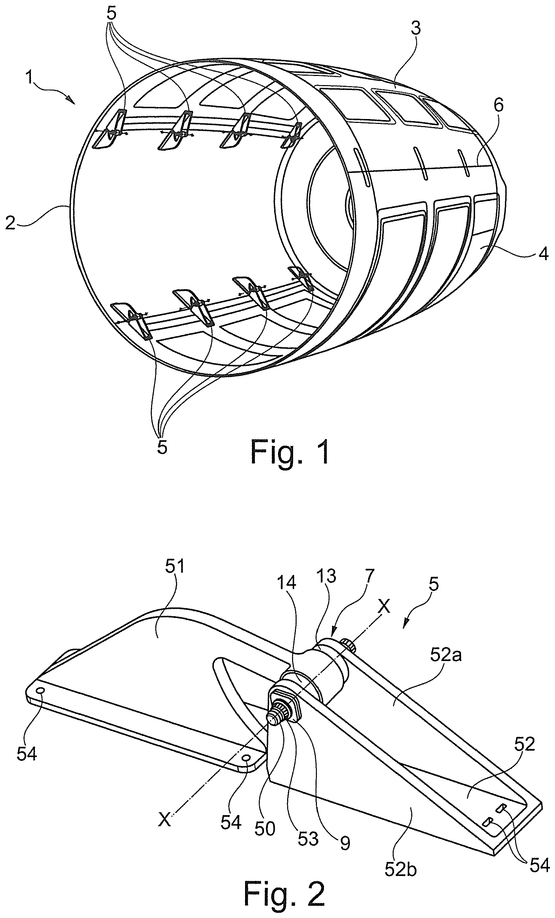

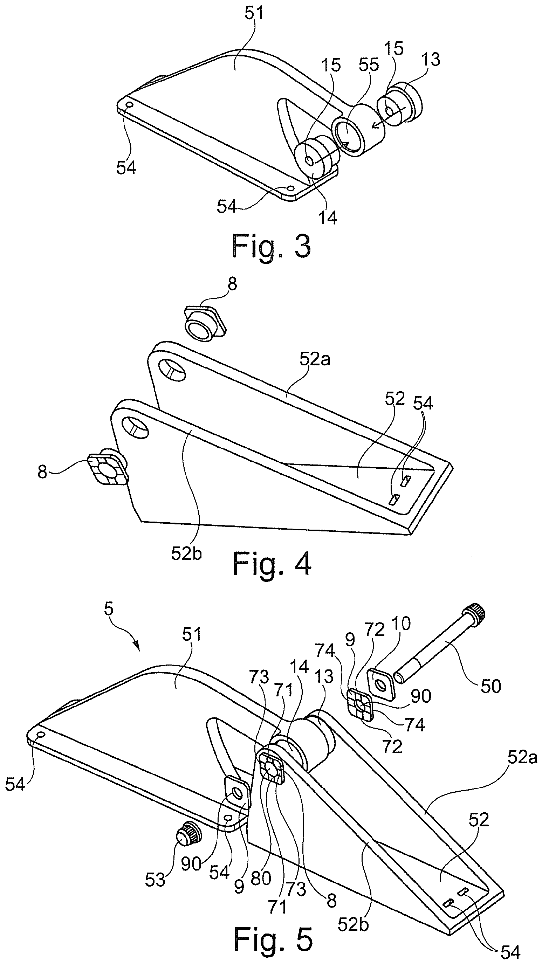

Nachfolgend wird unter Bezugnahme auf die Fig. 1 bis 10 eine Triebwerksverkleidung 1 gemäß einem ersten bevorzugten Ausführungsbeispiel der Erfindung im Detail beschrieben.

Fig. 1 zeigt schematisch eine perspektivische Ansicht einer Triebswerksverkleidung 1, welche ein tonnenförmiges Gehäuse um ein nicht gezeigtes Triebwerk bildet. Die Triebwerksverkleidung 1 umfasst ein Gehäusebauteil 2, ein erstes Türelement 3 und ein zweites Türelement 4. Das erste Türelement 3 ist mittels einer Vielzahl von Scharnieren 5 am Gehäuseteil 2 angelenkt. Das zweite Türelement 4 ist ebenfalls mit einer Vielzahl von Scharnieren 5 am Gehäuseteil 2 angelenkt. Das Gehäuseteil 2 ist an einem Flugzeug oder dgl. befestigt. Die Türelemente stoßen an einer Stoßkante 6 zusammen.

Die Türelemente verlaufen über die gesamte axiale Länge der Triebwerksverkleidung 1.

Wie aus Fig. 1 ersichtlich ist, sind die beiden Türelemente 3, 4 beide gleich groß ausgebildet und überdecken jeweils eine Umfangsfläche, welche ungefähr doppelt so groß ist, wie die Umfangsfläche des Gehäuseteils 2. Dadurch kann ein großer Öffnungsbereich beim gegenläufigen Öffnen der beiden Türelemente 3, 4 erhalten werden, so dass Wartungsarbeiten oder dgl. am Triebwerk einfach ausgeführt werden können.

In diesem Ausführungsbeispiel sind jeweils genau vier Scharniere 5 zur Fixierung jedes Türelements 3, 4 am Gehäuseteil 2 vorgesehen.

Das Scharnier 5 ist im Detail aus den Fig. 2 bis 5 ersichtlich. Das Scharnier 5 umfasst ein erstes Scharnierelement 51, ein zweites Scharnierelement 52 und einen Bolzen 50. Der Bolzen 50 verbindet das erste Scharnierelement 51 mit dem zweiten Scharnierelement 52. Der Bolzen 50 ist mittels einer Mutter 53 gesichert. Jedes der beiden Scharnierelemente 51, 52 weist Befestigungsöffnungen 54 auf, um eine Fixierung des Scharniers am Gehäuseteil 2 bzw. an den Türelementen zu ermöglichen.

Das erste Scharnierelement 51 weist ein Auge 55 auf, in welchem ein erster Abstandshalter 13 und ein zweiter Abstandshalter 14 angeordnet sind. Die beiden Abstandshalter 13, 14 weisen jeweils eine Durchgangsöffnung 15 auf, deren Durchmesser dem Durchmesser des Bolzens 50 derart entspricht, dass der Bolzen 50 darin spielfrei aufgenommen ist. Die beiden Abstandshalter 13, 14 positionieren das erste Scharnierelement 51 zwischen den beiden Schenkeln 52a, 52b des zweiten Scharnierelements 52. Um eine große Variabilität zu erhalten, sind die beiden Abstandshalter 13, 14 vorgesehen, welche dann jeweils mit einem anderen zweiten Scharnierelement 52 beispielsweise einer anderen Triebwerksverkleidung, kombiniert werden können und entsprechend einem Abstand der Schenkel am zweiten Scharnierelement ausgewählt werden.

Weiterhin umfasst das Scharnier 5 eine Verstelleinrichtung 7, welche in einer Ruheposition des Scharniers eine Relativposition zwischen dem Türelement 3, 4 und dem Gehäuseteil 2 verändert.

Die Verstelleinrichtung 7 umfasst eine erste Rippenstruktur 11 und eine zweite Rippenstruktur 12.

Am zweiten Scharnierelement 52 sind zwei separate Zwischenbauteile 8 vorgesehen, auf denen ein erster Teil der ersten Rippenstruktur 11 und der zweiten Rippenstruktur 12 vorgesehen ist. Ein zweiter Teil der ersten und zweiten Rippenstruktur 11, 12 ist dabei auf einer separaten Scheibe 9 ausgebildet. Ein Innendurchmesser D1 einer ersten Öffnung 80 des Zwischenbauteils 8 ist dabei deutlich größer als ein Durchmesser des Bolzens 50. Ein Durchmesser D2 einer zweiten Öffnung 90 an der Scheibe 9 entspricht dabei einem Außendurchmesser des Bolzens 50 derart, dass der Bolzen spielfrei in der zweiten Öffnung 90 angeordnet ist.

Die erste Öffnung 80 im Zwischenbauteil 8 muss dabei nicht kreisförmig sein, sondern kann auch viereckig mit abgerundeten Ecken sein.

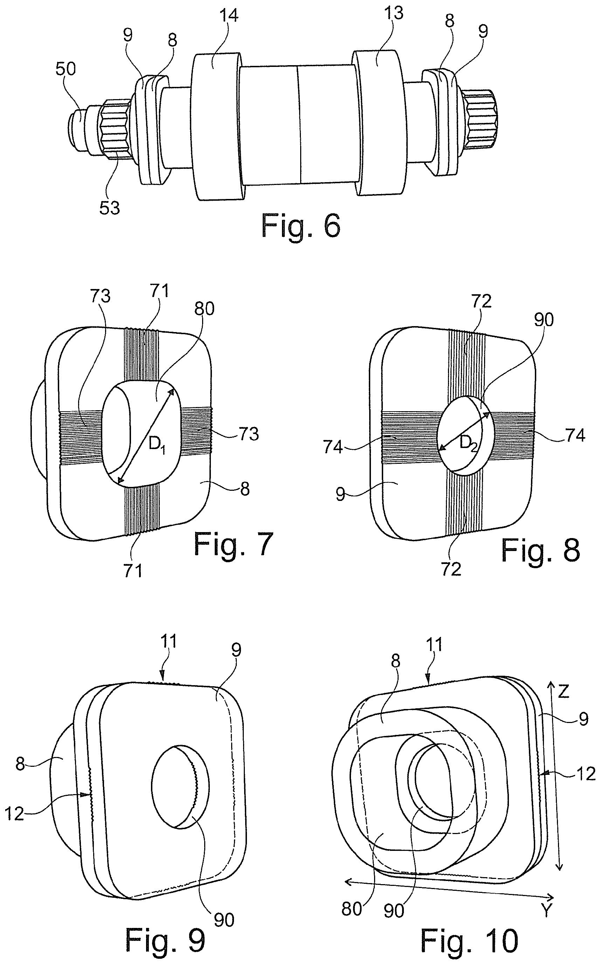

Die erste Rippenstruktur 11 umfasst erste Rippen 71 und zweite Rippen 72. Die ersten Rippen 71 sind am Zwischenbauteil 8 vorgesehen. Die zweiten Rippen 72 sind an der Scheibe 9 vorgesehen. Wie aus den Fig. 7 und 8 ersichtlich ist, sind die ersten und zweiten Rippen 71, 72 jeweils zweifach vorgesehen. Die ersten und zweiten Rippen verlaufen dabei linear in Vertikalrichtung und sind um 180° versetzt an den jeweiligen Öffnungen 80, 90 vorgesehen.

Die zweite Rippenstruktur 12 umfasst dritte Rippen 73 und vierte Rippen 74. Die dritten Rippen 73 sind am Zwischenbauteil 8 vorgesehen und die vierten Rippen 74 sind an der Scheibe 9 vorgesehen. Die dritten und vierten Rippen sind ebenfalls linear ausgebildet und um 180° versetzt an den jeweiligen Öffnungen 80, 90 vorgesehen, verlaufen jedoch in Horizontalrichtung. Somit sind die ersten und zweiten Rippen 71, 72 senkrecht zu den dritten und vierten Rippen 73, 74.

Mit anderen Worten sind die Rippen 71, 72, 73, 74 der beiden Rippenstrukturen 11, 12 in kreuzweiser Anordnung um eine jeweils mittige Öffnung im Bauteil vorgesehen.

Die Fig. 9 und 10 zeigen den montierten Zustand des Zwischenbauteils 8 und der Scheibe 9. Dabei greifen die ersten Rippen 71 in die zweiten Rippen 72 ein und dritten Rippen 73 greifen in die vierten Rippen 74 ein. Die beiden Rippenstrukturen 11, 12 spannen somit eine Verstellebene senkrecht zur Achse des Bolzens 50 auf.

Wie aus Figur 10 ersichtlich ist, können somit durch Versetzen der Positionen des Zwischenbauteils 8 zur Scheibe 9 jeweils eine Relativposition zwischen dem Zwischenbauteil 8 und der Scheibe 9 verändert werden. Ein Versetzen ist dabei sowohl in Y-Richtung, als auch in Z-Richtung möglich. Somit kann in Abhängigkeit von einer Breite der Rippen eine sehr genaue Verstellbarkeit zwischen dem ersten Scharnierelement 51, welches über die beiden Abstandshalter 13, 14 mit dem Bolzen 50 verbunden ist, wobei der Bolzen 50 in den beiden Scheiben 9 gelagert ist, und dem zweiten Scharnierelement 52, welches über das Zwischenbauteil 8 mit der Verstelleinrichtung 7 verbunden ist, erreicht werden. Eine Verstellung der Verstelleinrichtung 7 durch seitliches Versetzen der Scheibe 9 in Y- und/oder Z-Richtung relativ zum Zwischenbauteil 8 verschiebt somit auch die Position des Bolzens 50 und durch die Verbindung mit dem ersten Scharnierelement 51 auch eine Relativposition zwischen den beiden Scharnierelementen 51, 52.

Somit kann bei einer Triebwerksverkleidung 1 eine Einstellbarkeit mittels des Scharniers 5 erreicht werden. Dadurch können Ungenauigkeiten oder ein aufgrund eines langen Betriebes auftretender Verzug des Gehäuseteils 2 relativ zu den Türelementen 3, 4 ausgeglichen werden. Dadurch wird eine Ausgleichsmöglichkeit eines Spaltes bzw. einer Überdeckung zwischen Gehäuseteil 2 und Türelementen 3, 4 erhalten.

Es sei angemerkt, damit möglichst wenig Spiel zwischen dem Bolzen 50 und den Öffnungen 90 in den Scheiben 9 bzw. den Durchgangsöffnungen 15 in den Abstandshaltern 13, 14 vorhanden ist. Hierzu sind möglichst Spielpassungen mit kleiner Toleranz zu wählen.

Es sei ferner angemerkt, dass durch das Vorsehen weiterer Zusatzscheiben 10 mit Öffnungen zur Aufnahme des Bolzens das Scharnier 5 auch eine Verstellmöglichkeit in Richtung einer Bolzenachse X-X aufweist. Die Zusatzscheiben 10 können dabei an den Abstandshaltern 13, 14 oder den Scheiben 9 vorgesehen werden.

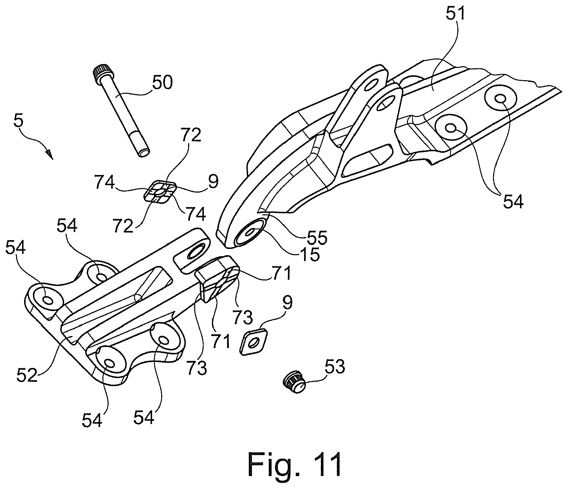

Fig. 11 zeigt ein Scharnier 5 einer Triebwerksverkleidung 1 gemäß einem zweiten Ausführungsbeispiel der Erfindung.

Im Unterschied zum ersten Ausführungsbeispiel ist beim zweiten Ausführungsbeispiel der erste Teil der Verstelleinrichtung 7 nicht an einem Zwischenbauteil oder dgl. vorgesehen, sondern direkt auf dem zweiten Scharnierelement 52. Mit anderen Worten sind die ersten Rippen 71 und die dritten Rippen 73 direkt am zweiten Scharnierelement 52 vorgesehen. Somit kann auf das Zwischenbauteil 8 des ersten Ausführungsbeispiels verzichtet werden. Der zweite Teil der Verstelleinrichtung 7 ist wie im ersten Ausführungsbeispiel an der Scheibe 9 vorgesehen. Auch sind keine Abstandshalter 13, 14 vorgesehen. Somit kann die Teilezahl der Verstelleinrichtung 7 reduziert werden, so dass die Triebwerksverkleidung einfacher herstellbar und insbesondere auch einfacher montierbar ist. Auch ist eine Verstellung des verstellbaren Scharniers 5 einfacher, da eine Gefahr eines Verlierens von Teilen reduziert ist.

Wie in den beschriebenen Ausführungsbeispielen dargelegt, ist erfindungsgemäß somit ein einstellbares Scharnier 5 vorgesehen, welches Türelemente 3, 4 einer Triebwerksverkleidung 1 schwenkbar sichert. Eine Verstellung kann dabei im geöffneten oder geschlossenen Zustand mittels einer Verstelleinrichtung 7 in zwei Richtungen, nämlich in Z-Richtung, d.h., vertikaler Richtung, und Y-Richtung, d.h., horizontaler Richtung, oder in beiden Richtungen vorgenommen werden. Durch das Vorsehen von Zusatzscheiben 10 kann ferner auch eine Erstellung in Richtung einer Bolzenachse (X-X-Richtung) vorgenommen werden. Der Bolzen 50 wird dabei am zweiten Scharnierelement 52 sowie dem zweiten Teil der Verstelleinrichtung 7 an den Scheiben 9 gelagert. Eine Relativversetzung der Scheibe 9 zum Zwischenbauteil 8 bzw. den direkt auf dem zweiten Scharnierelement 52 vorgesehenen ersten und dritten Rippen 71, 73 ermöglicht somit eine Relativverstellung zwischen dem ersten und zweiten Scharnierelement 51, 52.

Die Rippen 71, 72, 73, 74 der beiden Rippenstrukturen 11, 12 sind in den Ausführungsbeispielen linear ausgeführt. Ein Querschnitt der Rippen ist dabei sich verjüngend, vorzugsweise trapezförmig oder dreieckförmig. Je schmaler ein Fuß der Rippen vorgesehen ist, desto kleiner können die Verstellschritte zwischen den Scharnierelementen ausgeführt werden.

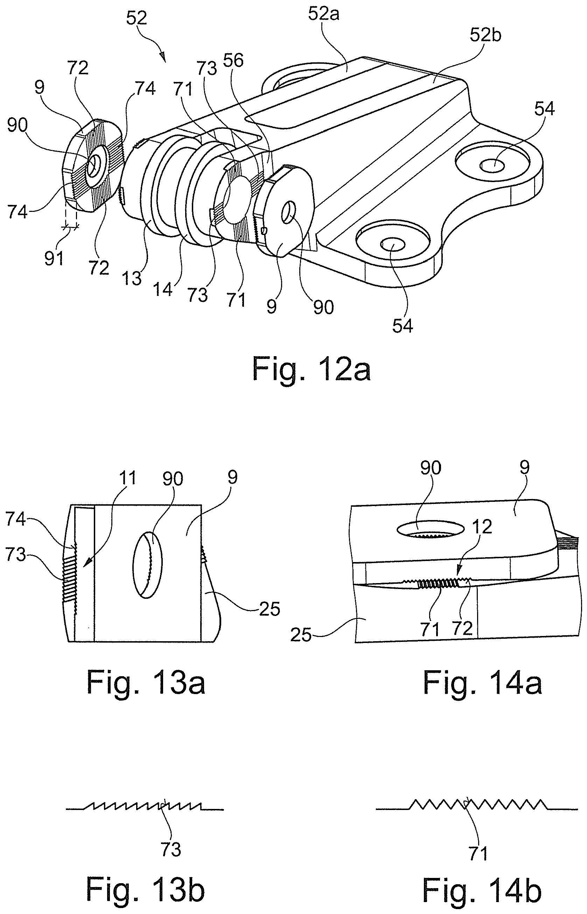

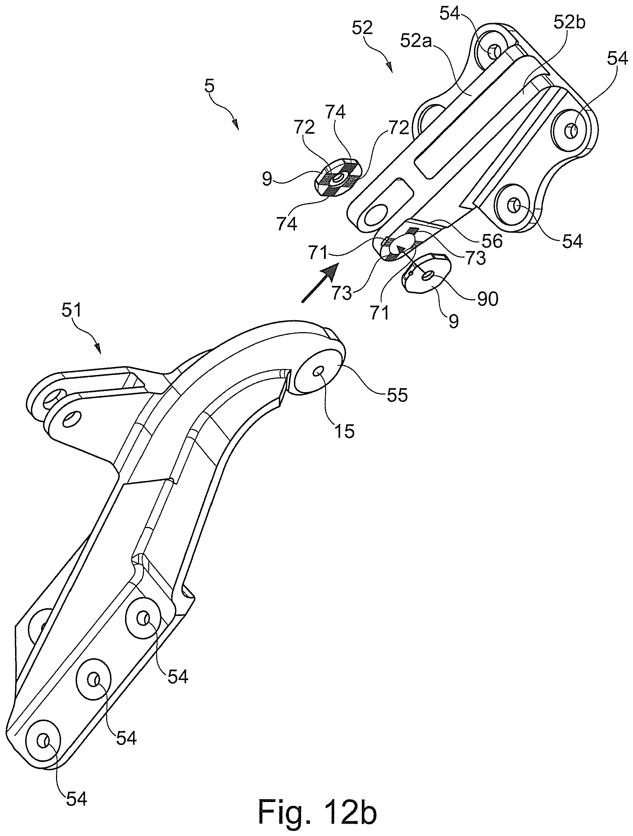

Fig. 12a und 12b zeigen schematisch ein zweites Scharnierelement 52 eines Scharniers gemäß einem dritten Ausführungsbeispiel der Erfindung. Das dritte Ausführungsbeispiel entspricht im Wesentlichen dem zweiten Ausführungsbeispiel, wobei die ersten Rippen 71 und die dritten Rippen 73 wieder direkt am zweiten Scharnierelement vorgesehen sind. Wie aus Fig. 12a ersichtlich ist, sind die ersten und dritten Rippen an einem Rücksprung 56 vorgesehen. Die Tiefe des Rücksprungs 56 entspricht dabei einer Dicke 91 der Scheibe 9. Somit ergibt sich bei montierter Scheibe 9 eine flache Seitenfläche bezüglich der beiden Schenkel 52a, 52b des zweiten Scharnierelements 52. Dadurch kann ein noch kompakterer Aufbau erreicht werden. Im dritten Ausführungsbeispiel sind ferner noch ein erster und zweiter Abstandshalter 13, 14 vorgesehen (nur in Fig. 12a gezeigt), welche ein Auge 55 eines ersten Scharnierelements 51 zwischen sich aufnehmen. Auch das dritte Ausführungsbeispiel hat somit eine reduzierte Teilezahl und kann ferner ein noch kompakteren und einfacheren Aufbau aufweisen, welche insbesondere auch schneller und kostengünstiger montierbar ist.

In den Fig. 13a, 13b sowie 14a, 14b sind zwei beispielhafte Darstellungen von Rippenstrukturen 11, 12 gezeigt. Die in den Fig. 13a und 13b gezeigte Rippenstruktur weist im Schnitt dreieckförmige Rippen auf, wobei ein rechter Winkel der dreieckförmigen Rippen an einem Basisbereich vorgesehen ist. Hierdurch ergibt sich ein asymmetrisches Profil, welches lediglich in einer Richtung richtig montiert werden kann. Im Unterschied dazu zeigen die Fig. 14a und 14b ein Profil für eine Rippenstruktur, welche symmetrisch ist. Ein rechter Winkel ist dabei an einer Spitze der jeweils dreieckförmigen Rippen vorgesehen. Hierdurch können Montagefehler bzw. Beschädigungen bei der Montage der Scheiben 9 vermieden werden. Es sei angemerkt, dass die in den Fig. 13a, 13b und 14a, 14b gezeigten Rippenstrukturen bei allen beschriebenen Ausführungsbeispielen verwendet werden können. Es sei ferner angemerkt, dass an den Scharnierelementen 51, 52 auch unterschiedliche erste und zweite Rippenstrukturen verwendet werden können. Beispielsweise kann in einer Horizontalrichtung die in den Fig. 13a und 13b gezeigte Rippenstruktur verwendet werden und in einer vertikalen Richtung die in den Fig. 14a und 14b gezeigte Rippenstruktur verwendet werden. Die Form der Rippen kann dabei beispielsweise auch entsprechend den geometrischen Formen von metrischen Regelgewinden gewählt werden.

### Bezuaszeichenliste:

- 1: Triebwerksverkleidung
- 2: Gehäuseteil
- 3: erstes Türelement
- 4: zweites Türelement
- 5: Scharnier
- 6: Stoßkante
- 7: Verstelleinrichtung
- 8: Zwischenbauteil
- 9: Scheibe
- 10: Zusatzscheibe
- 11: erste Rippenstruktur
- 12: zweite Rippenstruktur
- 13: erster Abstandshalter
- 14: zweiter Abstandshalter
- 15: Durchgangsöffnung
- 50: Bolzen
- 51: erstes Scharnierelement
- 52: zweites Scharnierelement
- 52a, 52b: Schenkel
- 53: Mutter
- 54: Befestigungsöffnungen
- 55: Auge
- 56: Rücksprung
- 71: erste Rippen
- 72: zweite Rippen
- 73: dritte Rippen
- 74: vierte Rippen
- 80: Öffnung
- 90: Öffnung
- 91: Dicke der Scheibe 9
- D1: erster Durchmesser
- D2: zweiter Durchmesser
- X-X: Bolzenachse

## Patentansprüche

1. Triebwerksverkleidung, umfassend:
- ein Gehäuseteil (2),
- wenigstens ein Türelement (3; 4), und
- ein Scharnier (5),
- wobei das Scharnier (5) das Türelement (3; 4) am Gehäuseteil (2) öffenbar und schließbar fixiert, und
- wobei das Scharnier (5) ein erstes Scharnierelement (51), ein zweites Scharnierelement (52) und einen Bolzen (50), der das erste Scharnierelement (51) mit dem zweiten Scharnierelement (52) verbindet, umfasst, wobei das Scharnier (5) eine Verstelleinrichtung (7) umfasst, welche derart einstellbar ist, dass eine Relativposition des Türelementes (3; 4) zum Gehäuseteil (2) veränderbar ist,
- wobei die Verstelleinrichtung (7) eingerichtet ist, eine Position des die Scharnierelemente (51, 52) verbindenden Bolzens (50) relativ zum ersten oder zweiten Scharnierelement (51, 52) zu verstellen,
- wobei das erste Scharnierelement (51) eine erste Öffnung (15) zur Aufnahme des Bolzens (50) aufweist, welche den Bolzen (50) spielfrei aufnimmt und das zweite Scharnierelement (52) eine zweite Öffnung (80) aufweist, welche den Bolzen (50) mit Spiel aufnimmt, und
- wobei die Verstelleinrichtung (7) eine erste Rippenstruktur (11) mit einer Vielzahl von ersten Rippen (71) und einer Vielzahl von zweiten Rippen (72) umfasst, wobei die ersten Rippen (71) in die zweiten Rippen (72) eingreifen.

2. Triebwerksverkleidung nach Anspruch 1, **dadurch gekennzeichnet, dass** die Verstelleinrichtung (7) eine zweite Rippenstruktur (12) mit einer Vielzahl von dritten Rippen (73) und einer Vielzahl von vierten Rippen (74) umfasst, wobei die dritten Rippen (73) in die vierten Rippen (74) eingreifen.

3. Triebwerksverkleidung nach Anspruch 2, **dadurch gekennzeichnet, dass** die erste Rippenstruktur (11) senkrecht zur zweiten Rippenstruktur (12) angeordnet ist.

4. Triebwerksverkleidung nach einem der vorhergehenden Ansprüche, **dadurch gekennzeichnet, dass** die erste Rippenstruktur (11) und/oder die zweite Rippenstruktur (12) doppelt vorgesehen sind.

5. Triebwerksverkleidung nach einem der vorhergehenden Ansprüche, **dadurch gekennzeichnet, dass** die ersten Rippen (71) direkt am ersten Scharnierelement (51) ausgebildet sind und die zweiten Rippen (72) an einem mit dem Bolzen (50) verbundenen Bauteil (9) angeordnet sind.

6. Triebwerksverkleidung nach einem der vorhergehenden Ansprüche, **dadurch gekennzeichnet, dass** die ersten Rippen (71) an einem mit dem ersten Scharnierelement (51) verbundenen Zwischenbauteil (8) angeordnet sind.

7. Triebwerksverkleidung nach einem der vorhergehenden Ansprüche, ferner umfassend Unterlegscheiben (10), um eine Relativposition zwischen dem ersten Scharnierelement (51) und dem zweiten Scharnierelement (52) in Richtung der Bolzenachse (X-X) zu ermöglichen.

## Claims

1. Engine cowling, comprising:
- a housing part (2),
- at least one door element (3; 4), and
- a hinge (5),
- the hinge (5) fixing the door element (3; 4) on the housing part (2) such that it can be opened and closed, and
- the hinge (5) comprising a first hinge element (51), a second hinge element (52) and a pin (50) which connects the first hinge element (51) to the second hinge element (52),
- the hinge (5) comprising an adjusting device (7) which can be set in such a way that a relative position of the door element (3; 4) with respect to the housing part (2) can be changed,
- the adjusting device (7) being set up to adjust a position of the pin (50) which connects the hinge elements (51, 52) relative to the first or second hinge element (51, 52),
- the first hinge element (51) having a first opening (15) for receiving the pin (50), which first opening (15) receives the pin (50) without play, and the second hinge element (52) having a second opening (80) which receives the pin (50) with play, and
- the adjusting device (7) comprising a first rib structure (11) with a multiplicity of first ribs (71) and a multiplicity of second ribs (72), the first ribs (71) engaging into the second ribs (72).

2. Engine cowling according to Claim 1, **characterized in that** the adjusting device (7) comprises a second rib structure (12) with a multiplicity of third ribs (73) and a multiplicity of fourth ribs (74), the third ribs (73) engaging into the fourth ribs (74).

3. Engine cowling according to Claim 2, **characterized in that** the first rib structure (11) is arranged perpendicularly with respect to the second rib structure (12).

4. Engine cowling according to one of the preceding claims, **characterized in that** the first rib structure (11) and/or the second rib structure (12) is/are provided twice.

5. Engine cowling according to one of the preceding claims, **characterized in that** the first ribs (71) are configured directly on the first hinge element (51), and the second ribs (72) are arranged on a component (9) which is connected to the pin (50).

6. Engine cowling according to one of the preceding claims, **characterized in that** the first ribs (71) are arranged on an intermediate component (8) which is connected to the first hinge element (51).

7. Engine cowling according to one of the preceding claims, comprising, furthermore, washers (10), in order to make a relative position possible between the first hinge element (51) and the second hinge element (52) in the direction of the pin axis (X-X).

## Revendications

1. Capotage de moteur, comprenant :
- une partie formant carter (2),
- au moins un élément formant porte (3 ; 4), et
- une charnière (5),
- la charnière (5), fixant de manière à pouvoir l'ouvrir et le fermer l'élément formant porte (3 ; 4) sur la partie formant carter (2), et
- la charnière (5) comprenant un premier élément de charnière (51), un deuxième élément de charnière (52) et un boulon (50) qui relie le premier élément de charnière (51) avec le deuxième élément de charnière (52), la charnière (5) comprenant un dispositif de réglage (7), lequel est réglable de telle sorte qu'une position relative de l'élément formant porte (3 ; 4) par rapport à la partie formant carter (2) soit variable,
- le dispositif de réglage (7) étant aménagé pour régler une position du boulon (50) reliant les éléments de charnière (51, 52) par rapport au premier ou au deuxième élément de charnière (51, 52),
le premier élément de charnière (51) comportant un premier orifice (15) destiné à recevoir le boulon (50), lequel réceptionne le boulon (50) sans le moindre jeu et le deuxième élément de charnière (52) comportant un deuxième orifice (80), lequel réceptionne le boulon (50) avec un jeu, et
- le dispositif de réglage (7) comprenant une première structure nervurée (11) pourvue d'une pluralité de premières nervures (71) et d'une pluralité de deuxième nervures (72), les premières nervures (71) s'engageant dans les deuxièmes nervures (72).

2. Capotage de moteur selon la revendication 1, **caractérisé en ce que** le dispositif de réglage (7) comprend une deuxième structure nervurée (12) pourvue d'une pluralité de troisièmes nervures (73) et d'une pluralité de quatrièmes nervures (74), les troisièmes nervures (73) s'engageant dans les quatrièmes nervures (74).

3. Capotage de moteur selon la revendication 2, **caractérisé en ce que** la première structure nervurée (11) est placée à la perpendiculaire de la deuxième structure nervurée (12).

4. Capotage de moteur selon l'une quelconque des revendications précédentes, **caractérisé en ce que** la première structure nervurée (11) et/ou la deuxième structure nervurée (12) sont prévues en double.

5. Capotage de moteur selon l'une quelconque des revendications précédentes, **caractérisé en ce que** les premières nervures (71) sont conçues directement sur le premier élément de charnière (51) et les deuxièmes nervures (72) sont placées sur un élément structurel (9) relié avec le boulon (50).

6. Capotage de moteur selon l'une quelconque des revendications précédentes, **caractérisé en ce que** les premières nervures (71) sont placées sur un élément structurel intermédiaire (8) relié avec le premier élément de charnière (51).

7. Capotage de moteur selon l'une quelconque des revendications précédentes, comprenant en outre des rondelles plates (10) destinées à permettre une position relative entre le premier élément de charnière (51) et le deuxième élément de charnière (52) dans la direction de l'axe du boulon (X-X).
